# EUROPÄISCHE PATENTSCHRIFT

(11) **EP 3 452 205 B1**
(45) Veröffentlichungstag und Bekanntmachung des Hinweises auf die Patenterteilung: **30.06.2021**
(21) Anmeldenummer: 17721626.4
(22) Anmeldetag: 03.05.2017
(51) Int. Cl.: B01D 46/24

(54) **FILTERELEMENT, INSBESONDERE ZUR GASFILTRATION, UND FILTEREINRICHTUNG**
FILTER ELEMENT, IN PARTICULAR FOR GAS FILTRATION, AND FILTER DEVICE
ÉLÉMENT FILTRANT, EN PARTICULIER POUR LA FILTRATION DE GAZ, ET DISPOSITIF DE FILTRATION

(30) Priorität: 03.05.2016 DE 102016005356
(43) Veröffentlichungstag der Anmeldung: 13.03.2019
(73) Patentinhaber: MANN+HUMMEL GmbH, 71636 Ludwigsburg (DE)
(72) Erfinder: FRITZSCHING, Torsten, 71665 Vaihingen (DE); PEREIRA MADEIRA, Pedro Miguel, 74321 Bietigheim-Bissingen (DE); DONAUER, Nadine, 70736 Fellbach (DE); FRANZ, Andreas, 71638 Ludwigsburg (DE); HOLZWARTH, Marcel, Fayetteville, NC 28304 (US); WINTER, Manfred, 74906 Bad Rappenau (DE); GRUBER, Martin, 84140 Gangkofen (DE); KRIEGER, Joachim-Paul, 94419 Reisbach (DE)
(74) Vertreter: Mann + Hummel Intellectual Property
(86) Internationale Anmeldenummer: PCT/EP2017/060457
(87) Internationale Veröffentlichungsnummer: WO 2017/191151

(56) Entgegenhaltungen:
- DE-A1-102010 010 964
- JP-U- S58 106 553
- US-A1- 2012 067 017
- US-A1- 2015 101 299

## Beschreibung

### Technisches Gebiet

Die Erfindung bezieht sich auf ein Filterelement, insbesondere zur Gasfiltration, beispielsweise für einen Luftfilter, nach dem Oberbegriff des Anspruches 1, und weiterhin auf eine Filtereinrichtung mit einem solchen Filterelement. Derartige Luftfilter werden beispielsweise zur Filtration von Ansaugluft einer Brennkraftmaschine in Fahrzeugen eingesetzt.

### Stand der Technik

In der WO 01/02079 A1 wird ein Filterelement zur Luftfiltration in Brennkraftmaschinen beschrieben, das einen hohlzylindrischen Filtermediumkörper mit einem innen liegenden Stützgerüst sowie zwei stirnseitigen Endscheiben aufweist. Einteilig mit einer Endscheibe ist ein axial überstehender, umlaufender Dichtkragen ausgebildet, der im montierten Zustand von einem Gehäusebauteil eines Filtergehäuses umgriffen ist und an seiner radial innen liegenden Seite an einer zugeordneten Wandung des Gehäusebauteils radial anliegt.

Bei einem aus der DE 10 2008 027 279 A1 bekannten Luftfilter ist ebenfalls einteilig mit einer Endscheibe ein umlaufender Dichtkörper ausgebildet, der axial über die Endscheibe übersteht. In den Dichtkörper ist eine Ringnut eingebracht, in die zur Stabilisierung ein Vorsprung am Boden eines Gehäuseteils eingreift.

Aus der US 2015/101299 A1 ist ein Hohlfilterelement mit innenliegendem Stützgerüst und radialer Dichtung bekannt, bei der die Kontur der radialen Dichtung von einer Kreisform in eine geschwungene Form geändert wurde, sodass eine größere Kontaktfläche zwischen Dichtung und Anlagefläche hergestellt ist.

Aus der US 2012/067017 A1 ist es bekannt zur Verbesserung der Dichtwirkung einen versteiften Dichtkragen einzusetzen.

Die JP S58 106553 U offenbart ein Filterelement mit einem Dichtwulst mit einem durch eine Verlängerung des Mittelrohrs versteiften Abschnitt und einer flexiblen Dichtlippe, wobei die Dichtlippe radial außen an dem Wulst angeformt und als Axialdichtung ausgebildet ist.

Auch die DE 10 2010 010964 A1 offenbart ein Filterelement mit einer Axialdichtung mit verstärktem Dichtkragen.

### Offenbarung der Erfindung

Der Erfindung liegt die Aufgabe zugrunde, mit einfachen konstruktiven Maßnahmen ein Filterelement, dessen Filtermediumkörper einen innen liegenden Strömungsraum umschließt, sowie eine Filtereinrichtung so auszubilden, dass Roh- und Reinseite auf Dauer strömungsdicht separiert sind.

Diese Aufgabe wird erfindungsgemäß von einem Filterelement mit den Merkmalen des Anspruches 1 bzw. einer Filtereinrichtung gemäß Anspruch 10 gelöst. Die Unteransprüche geben zweckmäßige Weiterbildungen an.

Das erfindungsgemäße Filterelement wird vorzugsweise zur Gasfiltration eingesetzt, beispielsweise als Luftfilter zur Filtration der einer Brennkraftmaschine zuzuführenden Verbrennungsluft. Das Filterelement weist einen Filtermediumkörper auf, der einen innen liegenden Strömungsraum zumindest teilweise umschließt. Der Filtermediumkörper ist als Hohlkörper, beispielsweise hohlzylindrisch oder konisch mit einem kreisrunden oder mit einem ovalen Querschnitt aufgebaut, so dass der innen liegende Strömungsraum in Radialrichtung - bezogen auf die Längsachse des Filterelementes - umlaufend von dem Filtermediumkörper umschlossen ist. Der Filtermediumkörper ist an seiner Innenseite mit einem als Mittelrohr ausgebildeten Stützgerüst versehen, das dem Filtermediumkörper eine erhöhte Stabilität verleiht. Der Filtermediumkörper besteht aus einem Filtermittel, das beispielsweise als Faltenfilter mit einer Vielzahl von Filterfalten ausgebildet ist. Die Durchströmung des Filterelementes erfolgt, bezogen auf die Filterelementlängsachse, in Radialrichtung, vorzugsweise radial von außen nach innen, so dass die außen liegende Seite des Filtermediumkörpers die Rohseite bildet und der innen liegende Strömungsraum mit der Reinseite des Filtermediumkörpers kommuniziert. Die Ableitung erfolgt bei dieser Durchströmung des Filterelementes axial aus dem innen liegenden Strömungsraum.

An mindestens einer Stirnseite, vorzugsweise an beiden gegenüberliegenden Stirnseiten ist am Filtermediumkörper eine Endscheibe angeordnet. Zumindest eine der Endscheiben ist vorzugsweise ringförmig ausgebildet und besitzt eine zentrische Öffnung, über die Fluid aus dem innen liegenden Strömungsraum abgeleitet oder in den Strömungsraum hineingeleitet wird.

An einer Stirnseite des Filtermediumkörpers ist eine axial überstehende, umlaufende Dichtringlippe angeordnet, die zur Abdichtung gegenüber einem Gehäusebauteil dient, das Teil eines aufnehmenden Filtergehäuses ist, in das das Filterelement einsetzbar ist. Bei dem Gehäusebauteil handelt es sich beispielsweise um einen Gehäusegrundkörper oder um einen Anschlussstutzen, mit welchem der Gehäusegrundkörper verbindbar ist. Der Anschlussstutzen ist beispielsweise fest an einem Fahrzeug montiert. Der Gehäusegrundkörper kann lösbar mit dem Anschlussstutzen verbindbar sein und einen das Filtergehäuse verschließenden Deckel mitbilden oder mit einem Deckel verschließbar sein.

An der Stirnseite des Filtermediumkörpers ist, mit radialem Abstand zur Dichtringlippe, ein umlaufender Stützring angeordnet. Der Stützring stützt sich in Radialrichtung an dem Stützgerüst des Filtermediumkörpers ab. Diese Ausführung hat den Vorteil, dass im montierten Zustand der Stützring radiale Stützkräfte aufnehmen kann, die von dem Gehäusebauteil her stammen und in das Stützgerüst geleitet werden. Die Dichtringlippe muss keine abstützenden Kräfte in Radialrichtung aufnehmen, sondern muss lediglich Dichtkräfte, welche durch Anlage an das Gehäusebauteil entstehen, aufnehmen. Die Dichtringlippe ist somit von stützenden Radialkräften entlastet, so dass auch keine Gefahr einer Verformung der Dichtlippe besteht, die zu einer Undichtigkeit führen könnte.

Zweckmäßigerweise besteht der Stützring aus einem festeren Material als die Dichtringlippe, der Stützring weist eine signifikant kleinere Elastizität als die Dichtringlippe auf.

Dadurch ist der Stützring in der Lage, die Stützkräfte in Radialrichtung ohne signifikante Verformung aufzunehmen.

Erfindungsgemäß ist der Stützring einteilig mit dem Stützgerüst an der Innenseite des Filtermediumkörpers ausgebildet. Über die Verbindung mit dem Stützgerüst werden die vom Gehäusebauteil auf den Stützring wirkenden Kräfte auf das Stützgerüst weitergeleitet. Stützring und Stützgerüst sind vorteilhafterweise als Kunststoffbauteile ausgebildet und können gegebenenfalls im Kunststoff-Spritzgießverfahren hergestellt werden.

In einer alternativen Ausführung bilden der Stützring und das Stützgerüst separate Bauteile, die nicht einteilig ausgeführt sind, wobei der Stützring vorteilhafterweise mit dem Stützgerüst verbunden ist, so dass die Kräfte, insbesondere in Radialrichtung, vom Stützring auf das Stützgerüst übertragen werden können.

Axiale Kräfte, die auf den Stützring einwirken, werden bevorzugt zumindest teilweise ebenfalls in das Stützgerüst eingeleitet. Es kann aber zweckmäßig sein, zumindest einen Teil der axialen Stützkräfte auch über eine die Stirnseite des Filtermediumkörpers abdeckende Endscheibe aufzunehmen, an deren Außenseite der Stützring angeordnet sein kann.

Gemäß einer weiteren zweckmäßigen Ausführung ist die Dichtringlippe einteilig mit einer Endscheibe ausgebildet. Endscheibe und Dichtringlippe bestehen vorzugsweise aus einem Dichtschaum und werden in einem gemeinsamen Arbeitsschritt hergestellt. Die Endscheibe ist dicht mit dem Filtermediumkörper verbunden und deckt diesen zumindest stirnseitig ab.

Es kann zweckmäßig sein, in den Stützring Überströmöffnungen für das Dichtungsmaterial der Dichtringlippe einzubringen. Über die Überströmöffnungen kann das Dichtungsmaterial beispielsweise zum formgebenden Werkzeug der Dichtringlippe strömen, so dass eine Ausbreitung des Dichtungsmaterials in gewünschter Richtung ermöglicht wird. Vorteilhaft ist es außerdem, dass auch in den Überströmöffnungen Dichtungsmaterial verbleibt, das nach dem Aushärten eine feste Verbindung zwischen dem Dichtungsmaterial und dem Stützring gewährleistet.

Des Weiteren kann es zweckmäßig sein, dass der Stützring von Dichtungsmaterial der Dichtringlippe überzogen ist. Auf diese Weise wird zum einen eine Verbindung zwischen der Dichtringlippe und dem Stützring geschaffen. Zum anderen weist der Stützring eine Oberfläche mit erhöhter Reibung auf, wodurch ein verbesserter, spielfreier Sitz im Filtergehäuse gewährleistet ist. Der Stützring ist somit in das Dichtungsmaterial der Dichtlippe eingebettet. Insbesondere für den bevorzugten Fall, dass Dichtlippe und Endscheibe einteilig ausgeführt sind, ist der Stützring somit auch in das Material der Endscheibe eingebettet.

Der Stützring besitzt einen L-förmigen Querschnitt mit einem axialen und einem radialen Stützschenkel. Der axiale Stützschenkel ragt axial über die Außenseite der Endscheibe hinaus, der radiale Stützschenkel erstreckt sich parallel zur Außenseite der Endscheibe und kann gegebenenfalls unmittelbar auf der Endscheibe aufliegen. Über den radialen Stützschenkel kann die Verbindung zum Stützgerüst an der Innenseite des Filtermediumkörpers geschaffen werden.

Die Dichtringlippe sitzt auf dem radialen Stützschenkel auf. Die Dichtringlippe befindet sich, gemäß bevorzugter Ausführung, radial an der innen liegenden Seite und der Stützring radial an der außen liegenden Seite an der Stirnseite des Filtermediumkörpers bzw. der Endscheibe.

Bei einem L-förmigen Querschnitt des Stützrings kann es zweckmäßig sein, sowohl in den axialen als auch in den radialen Stützschenkel des Stützrings jeweils Überströmöffnungen für das Dichtungsmaterial der Dichtringlippe einzubringen.

Gemäß noch einer weiteren zweckmäßigen Ausführung weist der Stützring an seinem stirnseitigen Ende einen radial abgekröpften Endabschnitt auf. Der Endabschnitt befindet sich bei einem Stützring mit L-förmigem Querschnitt an der Stirnseite des axialen Stützschenkels und ist gegenüber dem Hauptteil des axialen Stützschenkels radial versetzt, beispielsweise radial nach außen versetzt. Hierdurch entsteht in dem axialen Stützschenkel benachbart zu dessen Stirnseite eine Stufe, wodurch bei einem Überziehen des Stützrings mit Dichtungsmaterial eine verbesserte Verbindung erreicht wird. Die Filtereinrichtung weist ein Filtergehäuse zur Aufnahme des Filterelementes auf, das üblicherweise aus einem Anschlussbauteil für das Filterelement, einem Filtergrundgehäuse und einem aufzusetzenden Gehäusedeckel besteht. Filtergrundgehäuse und Gehäusedeckel bilden jeweils ein Gehäusebauteil oder sind einteilig ausgeführt. Ein Gehäusebauteil, insbesondere ein Auslassstutzen, mit welchem das Filtergrundgehäuse verbindbar ist, übergreift im montierten Zustand sowohl den Stützring als auch die Dichtringlippe, die radial zueinander versetzt an der Endscheibe angeordnet sind. Dementsprechend liegt die Dichtringlippe an einer radialen Seite und der Stützring an der gegenüberliegenden radialen Seite am Gehäusebauteil an bzw. stützt sich an dem Gehäusebauteil ab.

Vorzugsweise weist das übergreifende Gehäusebauteil, insbesondere der Auslassstutzen für das Reinfluid, eine Aufnahmenut für den Stützring und die Dichtringlippe auf. Die radial innen liegende Wand der Aufnahmenut verläuft hierbei vorteilhaft schräg zu einer Mittelachse des Filterelements, sodass sich die Aufnahmenut zum Filterelement hin aufweitet. Hierdurch ist die Dichtringlippe einfach relativ zu der Aufnahmenut positionierbar. Beim weiteren Einführen des Filterelements wird die Dichtringlippe nach radial außen gedrückt, sodass die Dichtringlippe im montierten Zustand dichtend an der radial inneren Wand der Aufnahmenut anliegt.

In den Zwischenraum, der zwischen dem Stützring und der Dichtringlippe gebildet ist, greift, gemäß einer weiteren vorteilhaften Ausführung, ein Gegenkonturelement ein, das an dem übergreifenden Gehäusebauteil des Filtergehäuses gebildet ist. Das Gegenkonturelement kann in Umfangsrichtung durchgehend oder mit Unterbrechungen ausgebildet sein. Das in den Zwischenraum eingreifende Gegenkonturelement sorgt für eine radiale Abstützung sowohl der Dichtringlippe als auch des Stützrings. Das Gegenkonturelement ist vorzugsweise einteilig mit dem Gehäusebauteil ausgebildet.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: ein Filterelement, das in einen Luftfilter für eine Brennkraftmaschine einsetzbar ist, in perspektivischer und geschnittener Darstellung,
- Fig. 2: das Filterelement gemäß Fig. 1 mit einem übergreifenden Gehäusebauteil,
- Fig. 3: in vergrößerter Darstellung den stirnseitigen Bereich des Filterelementes mit übergreifendem Gehäusebauteil in einer Ausführungsvariante,
- Fig. 4: den stirnseitigen Bereich des Filterelementes in einer weiteren Ausführungsvariante.

In den Figuren sind gleiche Bauteile mit gleichen Bezugszeichen versehen.

### Ausführungsform(en) der Erfindung

Das Filterelement 1 ist als Hohlkörper ausgeführt mit einem ovalen oder elliptischen Querschnitt und wird, bezogen auf seine Längsachse 5, in Radialrichtung von außen nach innen von dem zu reinigenden Fluid durchströmt. Das Filterelement 1 wird beispielsweise zur Gasfiltration, insbesondere für einen Luftfilter einer Brennkraftmaschine eingesetzt.

Das Filterelement 1 weist einen Filtermediumkörper 2 auf, an dem die Filtration stattfindet und der beispielsweise als Faltenfilter ausgeführt ist. An der Innenseite, die die Reinseite bildet, befindet sich am Filtermediumkörper 2 ein Stützgerüst 3, das dem Filtermediumkörper 2 Stabilität verleiht. An der Stirnseite ist der Filtermediumkörper 2 von einer ringförmigen Endscheibe 4 bedeckt, die die Stirnseite strömungsdicht verschließt. Die Endscheibe 4 ist einteilig mit einer umlaufenden Dichtringlippe 6 ausgebildet, die sich axial über die Außenseite erhebt. Außerdem ist in die Endscheibe 4 ein Stützring 7 eingebettet, der radial weiter außen angeordnet ist und konzentrisch zur umlaufenden Dichtringlippe 6 verläuft. Der Stützring 7 liegt radial auf Abstand zur innen liegenden Dichtringlippe 6, zwischen Stützring 7 und Dichtringlippe 6 befindet sich ein umlaufender Zwischenraum 8. Auch der Stützring 7 erhebt sich axial über die Stirnseite des Filtermediumkörpers 2.

Der Stützring 7 weist im Querschnitt L-Form auf und setzt sich aus einem radialen Stützschenkel 9 und einem axialen Stützschenkel 10 zusammen. Der radiale Stützschenkel 9 liegt mittelbar über die Endscheibe 4 oder unmittelbar auf dem Filtermediumkörper 2 auf und erstreckt sich radial nach außen bis zum axialen Stützschenkel 10, mit dem die Stirnseite des radialen Stützschenkels 9 verbunden ist. Vorteilhafterweise bilden das Stützgerüst 3 und der Stützring 7 ein einteiliges Kunststoff-Bauteil, das im Spritzgießverfahren hergestellt werden kann.

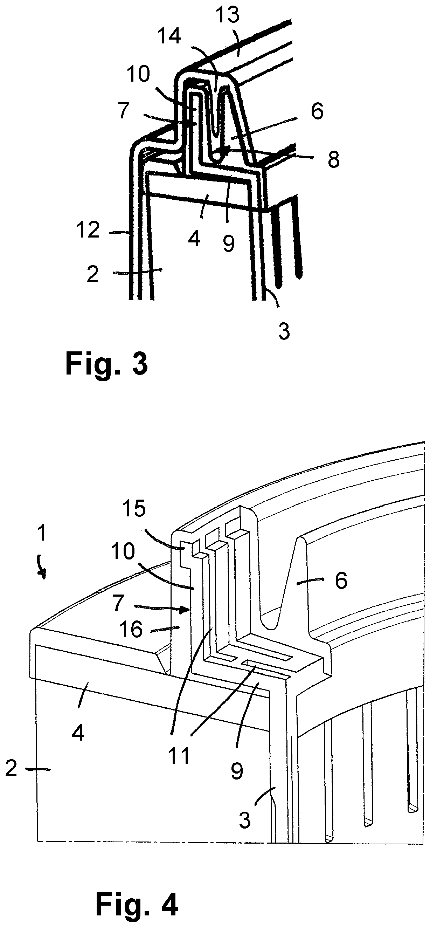

Der radiale Stützschenkel 9 ist Träger der Dichtringlippe 6. Die Endscheibe 4 und die Dichtringlippe 6 bestehen vorzugsweise aus dem gleichen Dichtungsmaterial und können einteilig ausgebildet sein. Hierfür sind in den radialen und/oder den axialen Stützschenkel 9, 10 Überströmöffnungen 11 eingebracht (Fig. 4), durch die während der Herstellung von Endscheibe 4 und Dichtringlippe 6 das flüssige Dichtungsmaterial bzw. der Dichtungsschaum hindurchtreten kann. Nach dem Erstarren befindet sich Dichtungsmaterial auch in den Überströmöffnungen 11, wodurch eine feste Verbindung zwischen dem Dichtungsmaterial und dem Stützring 7 geschaffen wird. Der Stützring 7 ist außerdem an seinen Seitenflächen und der Stirnkante von Dichtungsmaterial überzogen.

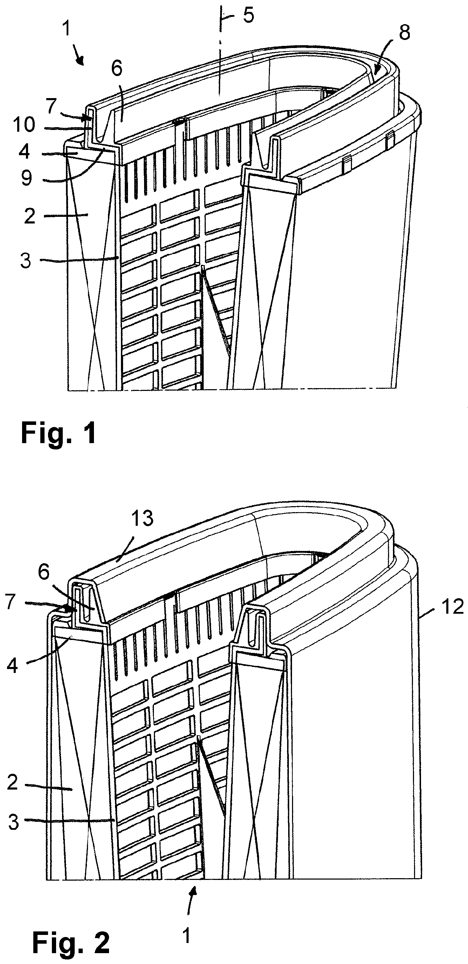

In Fig. 2 ist das Filterelement 1 mit einem schematisch dargestellten Gehäusebauteil 12 eines Filtergehäuses dargestellt. Das Filterelement 1 ist in das Gehäusebauteil 12 eingesetzt, wobei die Stirnseite des Filterelementes 1 von dem Gehäusebauteil 12 übergriffen ist. Das Gehäusebauteil 12 weist im stirnseitigen Bereich einen umlaufenden Trog 13 bzw. eine Aufnahmenut auf, in dem/der die Dichtringlippe 6 und der Stützring 7 aufgenommen sind. An der radial innen liegenden Trogwandung des Trogs 13 liegt die Außenseite der Dichtringlippe 6 an, an der radial außen liegenden Trogwandung liegt die Außenseite des Stützrings 7 an. Der Stützring 7 nimmt Radialkräfte auf, die von dem Trog 13 des Gehäusebauteils 12 ausgeübt werden, und überträgt diese auf das Stützgerüst 3. Die Dichtringlippe 6 ist nur verhältnismäßig geringen radialen Kräften ausgesetzt und liegt flächig an der Innenseite der Trogwandung an, wodurch eine strömungsdichte Verbindung erreicht wird.

In Fig. 3 ist eine Ausführungsvariante dargestellt, bei der in den Zwischenraum 8 zwischen der Dichtringlippe 6 und dem Stützring 7 ein Gegenkonturelement 14 des Gehäusebauteils 12 einragt. Das Gegenkonturelement 14 befindet sich am Trog 13 des Gehäusebauteils 12 und erstreckt sich im montierten Zustand in Achsrichtung. Das Gegenkonturelement 14 füllt den Zwischenraum 8 zwischen Dichtringlippe 6 und Stützring 7 zumindest teilweise, gegebenenfalls vollständig aus und ist einteilig mit dem Gehäusebauteil 12 ausgebildet. Das Gegenkonturelement 14 stabilisiert sowohl die Dichtringlippe 6 als auch den Stützring 7 in Radialrichtung.

In Fig. 4 ist eine Ausführungsvariante dargestellt, bei der das stirnseitige Ende des axialen Stützschenkels 10 des Stützrings 7 einen radial nach außen abgekröpften Endabschnitt 15 aufweist. Hierdurch besitzt der axiale Stützschenkel 10 eine Stufe, welche die Verbindung mit dem Überzug 16 aus Dichtungsmaterial verbessert.

In Fig. 4 sind auch die Überströmöffnungen 11 dargestellt, die sowohl in den radialen Stützschenkel 9 als auch in den axialen Stützschenkel 10 des Stützrings 7 eingebracht sind und durch die flüssiges Dichtungsmaterial, wie z. B. Dichtschaum, bei der Herstellung hindurchtreten kann, welches die Dichtringlippe 6 bildet.

## Patentansprüche

1. Filterelement, insbesondere zur Gasfiltration, beispielsweise für einen Luftfilter, mit einem einen innen liegenden Strömungsraum umschließenden Filtermediumkörper (2), an dessen Innenseite ein Stützgerüst (3) angeordnet ist, mit mindestens einer axial über eine Stirnseite des Filtermediumkörpers (2) überstehenden, umlaufenden Dichtringlippe (6) zur Abdichtung gegen ein Gehäusebauteil (12) eines aufnehmenden Filtergehäuses, wobei mit radialem Abstand zur Dichtringlippe (6) ein Stützring (7) an der Stirnseite des Filtermediumkörpers (2) angeordnet ist und der Stützring (7) sich in Radialrichtung am Stützgerüst (3) abstützt, wobei der Stützring (7) einteilig mit dem Stützgerüst (3) ausgebildet ist, **dadurch gekennzeichnet, dass** die Dichtringlippe (6) radial innen und der Stützring (7) radial außen an der Stirnseite des Filtermediumkörpers (2) angeordnet ist, dass der Stützring (7) eine signifikant kleinere Elastizität als die Dichtringlippe (6) aufweist, und dass der Stützring (7) einen L-förmigen Querschnitt mit einem axialen und einem radialen Stützschenkel (9, 10) aufweist, wobei die Dichtringlippe (6) auf dem radialen Stützschenkel (9) aufsitzt.

2. Filterelement nach Anspruch 1, **dadurch gekennzeichnet, dass** die Dichtringlippe (6) einteilig mit einer die Stirnseite des Filtermediumkörpers (2) überdeckenden Endscheibe (4) ausgebildet ist.

3. Filterelement nach Anspruch 1 oder 2, **dadurch gekennzeichnet, dass** der radiale Stützschenkel (9) sich in Richtung des Stützgerüsts (3) erstreckt und mit diesem verbunden ist.

4. Filterelement nach einem der Ansprüche 1 bis 3, **dadurch gekennzeichnet, dass** in den Stützring (7) Überströmöffnungen (11) für das Dichtungsmaterial der Dichtringlippe (6) eingebracht sind.

5. Filterelement nach einem der Ansprüche 1 bis 4, **dadurch gekennzeichnet, dass** der Stützring (7) vom Dichtungsmaterial der Dichtringlippe (6) überzogen ist.

6. Filterelement nach einem der Ansprüche 1 bis 5, **dadurch gekennzeichnet, dass** der Stützring (7) einen stirnseitigen, radial abgekröpften Endabschnitt (15) aufweist.

7. Filtereinrichtung mit einem Filterelement (1) nach einem der Ansprüche 1 bis 6 und mit einem Filtergehäuse zur Aufnahme des Filterelements (1).

8. Filtereinrichtung nach Anspruch 7, **dadurch gekennzeichnet, dass** der Stützring (7) und die Dichtringlippe (6) an radial gegenüberliegenden Seiten an dem übergreifenden Gehäusebauteil (12) anliegen bzw. sich abstützen.

9. Filtereinrichtung nach Anspruch 7 oder 8, **dadurch gekennzeichnet, dass** das übergreifende Gehäusebauteil (12) eine Aufnahmenut für den Stützring (7) und die Dichtringlippe (6) aufweist, wobei eine radial innen liegende Wand der Aufnahmenut schräg zu einer Elementmittelachse verläuft, sodass sich die Aufnahmenut in Richtung des Filterelements nach radial innen aufweitet.

10. Filtereinrichtung nach einem der Ansprüche 7 bis 9, **dadurch gekennzeichnet, dass** an dem übergreifenden Gehäusebauteil (12) ein Gegenkonturelement (14) angeordnet ist, das in den Zwischenraum (8) zwischen dem Stützring (7) und der Dichtringlippe (6) einragt.

## Claims

1. Filter element, in particular for gas filtration, for example for an air filter, with an inner flow chamber enclosed by a filter medium body (2) on the interior side of which a support frame (3) is disposed, with at least one surrounding sealing ring lip (6) projecting axially beyond a front face of the filter medium body (2) for sealing against a housing component (12) of a receiving filter housing, wherein a supporting ring (7) is disposed at a radial distance from the sealing ring lip (6) on the front face of the filter medium body (2) and the supporting ring (7) is supported in radial direction by the support frame (3), wherein the supporting ring (7) is made in one piece with the support frame (3), **characterized in that** the sealing ring lip (6) is disposed radially inside and the supporting ring (7) radially outside on the front face of the filter medium body (2), that the supporting ring (7) features a significantly smaller elasticity than the sealing ring lip (6), and that the supporting ring (7) features an L-shaped cross section with an axial and a radial supporting leg (9, 10), wherein the sealing ring lip (6) rests on the radial supporting leg (9).

2. Filter element according to claim 1, **characterized in that** the sealing ring lip (6) is made in one piece with an end disc (4) covering the front face of the filter medium body (2).

3. Filter element according to claim 1 or 2, **characterized in that** the radial supporting leg (9) extends in the direction of the support frame (3) and is connected thereto.

4. Filter element according to one of the claims 1 to 3, **characterized in that** overflow openings (11) for the sealing compound of the sealing ring lip (6) are realized in the supporting ring (7).

5. Filter element according to one of the claims 1 to 4, **characterized in that** the supporting ring (7) is covered by the sealing compound of the sealing ring lip (6).

6. Filter element according to one of the claims 1 to 5, **characterized in that** the supporting ring (7) features a frontal end portion (15) which is radially offset.

7. Filtering device with a filter element (1) according to one of the claims 1 to 6 and with a filter housing for receiving the filter element (1).

8. Filtering device according to claim 7, **characterized in that** the supporting ring (7) and the sealing ring lip (6) abut against or are supported by the overlapping housing component (12) on radially opposite sides.

9. Filtering device according to claim7 or 8, **characterized in that** the overlapping housing component (12) features a receiving groove for the supporting ring (7) and the sealing ring lip (6), wherein a radially inner wall of the receiving groove extends obliquely with respect to an element center axis so that the receiving groove expands radially inwardly in the direction of the filter element.

10. Filtering device according to one of the claims 7 to 9, **characterized in that** a counter contour element (14), which projects into the gap (8) between the supporting ring (7) and the sealing ring lip (6), is disposed on the overlapping housing component (12).

## Revendications

1. Élément filtrant, notamment pour la filtration de gaz, par example pour un filtre à air, avec un espace d'écoulement situé à l'intérieur entouré d'un corps de milieu filtrant (2) à la face intérieure de laquelle est disposée une structure d'appui (3), avec au moins une lèvre de la bague d'étanchéité (6) faisant saillie axialement au-delà d'une face frontale du corps de milieu filtrant (2) pour assurer l'étanchéité contre un composant de boîtier (12) d'un boîtier de filtre récepteur, dans lequel une bague de support (7) est disposée à une distance radiale de la lèvre de la bague d'étanchéité (6) sur la face frontale du corps de milieu filtrant (2) et la bague de support (7) est supportée en sens radial sur la structure d'appui (3), dans lequel la bague de support (7) est conçue d'un seul tenant avec la structure de d'appui (3), **caractérisé en ce que** la lèvre de la bague d'étanchéité (6) est disposée radialement à l'intérieur et la bague de support (7) radialement à l'extérieur sur la face frontale du corps de milieu filtrant (2), que la bague de support (7) présente une élasticité significativement plus petite que la lèvre de la bague d'étanchéité (6), et que la bague de support (7) présente une section transversale en forme de L et une branche d'appui radiale (9, 10), dans lequel la lèvre de la bague d'étanchéité (6) repose sur une branche d'appui (9).

2. Élément filtrant selon la revendication 1, **caractérisé en ce que** la lèvre de la bague d'étanchéité (6) est conçue d'un seul tenant avec un disque d'extrémité (4) recouvrant une face frontale du corps de milieu filtrant (2).

3. Élément filtrant selon la revendication 1 ou 2, **caractérisé en ce que** la branche d'appui radiale (9) s'étend en direction de la structure d'appui (3) et est reliée à cette dernière.

4. Élément filtrant selon l'une quelconque des revendications 1 à 3, **caractérisé en ce que** des ouvertures de débordement (11) pour le matériau d'étanchéité de la lèvre de la bague d'étanchéité (6) sont réalisées dans la bague de support (7).

5. Élément filtrant selon l'une quelconque des revendications 1 à 4, **caractérisé en ce que** la bague de support (7) est revêtue du matériau d'étanchéité de la lèvre de la bague d'étanchéité (6).

6. Élément filtrants selon l'une quelconque des revendications 1 à 5, **caractérisé en ce que** la bague de support (7) présente une section d'extrémité frontale (15), décalée radialement.

7. Dispositif de filtration avec un élément filtrant (1) selon l'une quelconque des revendications 1 à 6 et avec un boîtier de filtre pour recevoir l'élément filtrant (1).

8. Dispositif de filtration selon la revendication 7, **caractérisé en ce que** la bague de support (7) et la lèvre de la bague d'étanchéité (6) reposent sur ou sont supportées par le composant de boîtier chevauchant (12) sur des côtés radialement opposés.

9. Dispositif de filtration selon la revendication 7 ou 8, **caractérisé en ce que** le composant de boîtier chevauchant (12) présente une rainure de réception pour la bague de support (7) et la lèvre de la bague d'étanchéité (6), dans lequel une paroi radialement intérieure de la rainure de réception s'étend obliquement par rapport à un axe central de l'élément, de sorte que la rainure de réception s'élargit radialement vers l'intérieur en direction de l'élément filtrant.

10. Dispositif de filtration selon l'une quelconque des revendications 7 à 9, **caractérisé en ce qu'**un élément de contre-contact (14) est disposé sur le composant de boîtier chevauchant (12), lequel élément de contre-contact fait saillie dans l'espace intermédiaire (8) entre la bague de support (7) et la lèvre de la bague d'étanchéité (6).
